# EUROPEAN PATENT SPECIFICATION

(11) **EP 0 330 726 B1**
(45) Date of publication and mention of the grant of the patent: **01.02.1995**
(21) Application number: 88111609.9
(22) Date of filing: 19.07.1988
(51) Int. Cl.: B42D 15/02

(54) **Composite cards**
Zusammengesetzte Karte
Cartes composites

(30) Priority: 01.03.1988 JP 27298/88; 01.03.1988 JP 27299/88; 13.04.1988 JP 91069/88; 14.04.1988 JP 92315/88; 28.04.1988 JP 106710/88; 28.04.1988 JP 106711/88; 28.04.1988 JP 106712/88
(43) Date of publication of application: 06.09.1989
(73) Proprietor: MITSUBISHI MATERIALS CORPORATION, Chiyoda-ku, Tokyo (JP)
(72) Inventor: Morikawa, Masaki, Osaka-shi Osaka (JP); Hosoda, Naoyuki, Osaka-shi Osaka (JP); Uchiyama, Naoki, Osaka-shi Osaka (JP)
(74) Representative: Füchsle, Klaus, Dipl.-Ing.

(56) References cited:
- DE-A- 2 737 164
- DE-U- 8 023 200
- DE-U- 8 236 376
- GB-A- 2 068 295

## Description

### BACKGROUND OF THE INVENTION

### FIELD OF THE INVENTION

The present invention relates to a composite card, which has considerable decorative worth, and which can be used for souvenirs or gifts. Further the present invention is concerned with a composite card which can be utilized as magnetic recording cards such as pre-paid telephone cards, pre-paid traffic cards, cash dispenser cards and credit cards, and another kinds of cards such as IC cards provided with integrated circuit chips, and optical recording cards.

### RELATED ART

Precious metals such as gold, silver, platinum and the like are becoming popular among not only the professional dealers but also public. Such precious metals are currently available in the market as coins or medals where are manufactured by pressing a small amount of a precious metal.

Such coins or medals are inadequate for using as souvenirs or gifts because they have small area, are thick and look poor.

It is desirable that the precious metals are available as goods having a large area, but being made thinner, so that they may be manufactured by using only a small amount of a precious metal. A thin metal plate as such goods can be manufactured by rolling a small amount of a precious metal. Thus there is obtained a thin metal plate that looks fine.

The mechanical strength of the plate is however weak because the plate is thin. The plate has, therefore, a tendency of being deformed, or being damaged, when a force is exerted thereon. The amount of the precious metal used in the plate can not be increased to solve the above described problem since the cost of the precious metal would then be such that the plate can not be used as a souvenir or gift.

A prior art that is of interest is GB-A-2 068 295 that discloses a magnetic card in which a magnetic band containing information is positioned on a sheet having printed or written matter thereon and the whole is interposed between an upper film of transparent resinous material overlying that face of the sheet that has the magnetic band thereon and an underlying film of resinous material overlying that face of the sheet that does not have the magnetic band thereon, the peripheral portions of said overlying and underlying films being bonded together to seal said sheet and magnetic band between said films.

### SUMMARY OF THE INVENTION

Accordingly, it is an object of the present invention to provide a composite card which has mechanical strength sufficient to prevent it from being deformed or damaged, in addition to having a decorative worth, and which is manufactured by using only a small amount of precious metal or alloys thereof.

With the above objects in mind the present invention is a composite card comprising a thin metal plate of at least one of precious metals or alloys thereof defining a substantially planar element having first and second planar surfaces; a first decorative reinforcement plate of a transparent polymeric material capable of protecting the thin metal plate disposed in facing relation to said first planar surface of said thin metal plate, the combination of said first decorative reinforcement plate and said thin metal plate being encapsulated in a transparent polymeric cover material.

### BRIEF DESCRIPTION OF THE DRAWINGS

The invention will now be described with reference to the accompanying drawings wherein.
Fig. 1 is a schematic sectional view showing a thin metal plate with a reinforcing plate thereon;
Fig. 2 is a top plan view of the thin metal plate shown in Fig. 1;
Fig. 3 is a top plan view showing the reinforcing plate shown in Fig. 1;
Fig. 4 is a perspective view showing a composite card comprising a thin metal plate, a secondary member or a reinforcement plate being superposed on the face of the thin metal plate, and a protective film covering entirely the plates therewith;
Fig. 5 is a view similar to Fig. 4 but showing the thin metal plate and the reinforcement plate at a process of superposing one to the other;
Fig. 6 is a view similar to Fig. 5 but showing both the thin metal plate and the reinforcement plate at a process of covering them with the protective film;
Fig. 7 is a perspective view showing a composite card comprising a thin metal plate, a pair of secondary members or reinforcement plates being superposed on each face of the thin metal plate, and a protective film covering the above-mentioned plates therewith;
Fig. 8 is a view similar to Fig. 7 but showing the thin metal plate at a process of being interposed between the reinforcement plates;
Fig. 9 is a perspective view showing a composite card comprising a thin metal plate, one secondary member or a reinforcement film covering entirely the thin metal plate therewith, another secondary member or a reinforcement plate being superposed on one face of the reinforcement film, and a protective film covering entirely the aforementioned plates and film therewith;
Fig. 10 is a sectional view taken along the line XV - XV of Fig. 9;
Fig. 11 is a view similar to Fig. 9 but showing the thin metal plate covered entirely with the reinforcement film and the reinforcement plate at a process of superposing one to the other;
Fig. 12 is a view similar to Fig. 11 but showing the thin metal plate and the reinforcement plate superposed on each other at a process of covering them with the protective film;
Fig. 13 is a cross-sectional view showing a composite card comprising a thin metal plate, one secondary member or a reinforcement film covering entirely the thin metal plate therewith, another secondary members or a pair of reinforcement plates being superposed on each face of the reinforcement film, and a protective film covering entirely the above-mentioned plates and film therewith;
Fig. 14 is a perspective view showing a process of manufacturing the composite card of Fig. 13, the process of interposing the thin metal plate covered entirely with the reinforcement film between the reinforcement plates;;
Fig. 15 is a view similar to Fig. 14 but showing both the thin metal plate and the reinforcement plates at a process of covering the plates with the protective film;
Fig. 16 is a perspective view showing a composite card comprising a thin metal plate, a secondary member or a reinforcement plate, a cushion sheet being interposed between the plates, and a protective film covering entirely the above-mentioned plates and sheet therewith;
Fig. 17 is a sectional view taken along the line XXII - XXII of Fig. 16;
Fig. 18 is a sectional view showing the reinforcement plate for using in the composite card of Figs. 16 and 17;
Fig. 19 is a view similar to Fig. 17 but showing a composite bard having marks formed on outer face of the protective film instead of forming the marks on inner face of the reinforcement plate;
Fig. 20 is a view similar to Fig. 17 but showing a composite card having two cushion sheets superposed on each face of the thin metal plate instead of having one cushion sheet superposed on one face thereof;
Fig. 21 is a view similar to Fig. 17 but showing a composite card having one cushion sheet covering entirely the thin metal plate therewith instead of having a cushion sheet superposed on one face thereof; and
Fig. 22 is a perspective view showing a composite card utilized for cash dispenser cards, credit cards or the like, the composite card comprising a thin metal plate, a pair of reinforcement plates being superposed on each face of the thin metal plate, a tape-like magnetic recording layer formed on a marginal portion along a longitudinal edge of one face of one reinforcement plate, and a protective film covering entirely the abovementioned plates therewith.

### DESCRIPTION OF PREFERRED EMBODIMENTS OF THE INVENTION

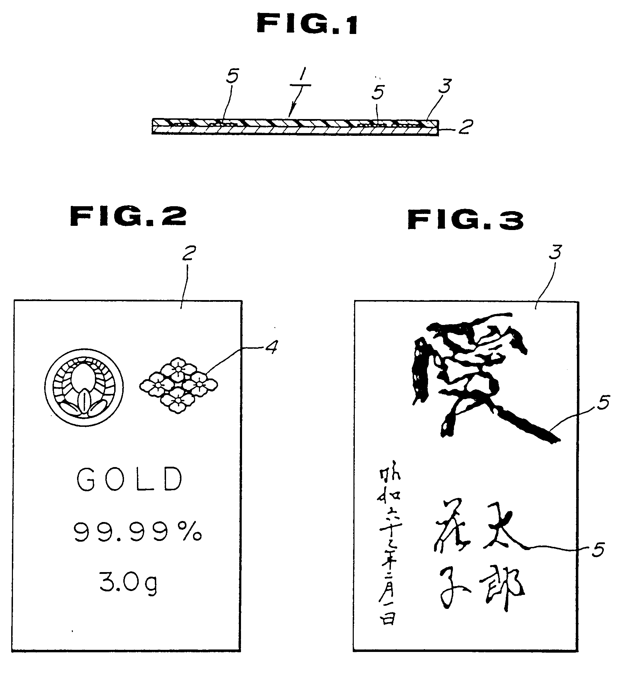

Figs. 1 to 3 illustrate a composite card. Reference numeral 1 denotes a composite card having a rectangular shape. The composite card 1 includes a thin precious metal plate 2 and a secondary member as a reinforcement plate 3 having the identical plan-view geometries as the metal plate 2. The reinforcement plate 3 is superposed on the metal plate 2. Both plates 2 and 3 are fixedly secured to each other as shown in Fig. 1. Thus, the composite card 1 comprises two layers, and the thickness thereof is between 0.015 and 3.0 millimeters. The maximum thickness thereof is 3.0 millimeters because the area of the composite card 1 becomes small when it is thicker than the above thickness. Also, the minimum thickness thereof is 0.015 millimeters because the mechanical strength thereof is weak even though the metal plate 2 is reinforced by the reinforcement plate 3 when the composite card 1 is thinner than the above thickness.

The metal plate 2 has a rectangular shape. The metal plate 2 may be manufactured by a method comprising steps of; rolling repeatedly a sheet of a metal including one or more materials selected from the group consisting of the above-mentioned precious metals and their alloys such as 18 K gold alloy (75% Au, 12.5% Ag, 12.5% Cu) and the like, and cutting the obtained sheet to rectangular shape. The metal plate 2 has preferably the identical plan-view geometries as calling cards, and the thickness is between 0.005 and 0.3 millimeters. The maximum thickness thereof is 0.3 millimeters because the amount of a precious metal used in the metal plate 2 needs to be larger when the metal plate 2 is thicker than the above thickness. Also, the minimum thickness thereof is 0.005 millimeters because the mechanical strength thereof is weak when it is thinner than the above thickness. When the metal plate 2 is made of gold (the purity: 99.99% or more, the weight: 4.0 grams), the thickness of the metal plate 2 becomes about 60 microns.

Further, the metal plate 2 has opposite faces, one face is in contact with one face of the reinforcement plate 3, the other face has marks 4 formed thereon as shown in Fig. 2. The marks 4 are formed by grooves indicating various information. The grooves of the marks 4 can be formed by stamping so as to designate characters, numerals, alphabets, figures, graphs, symbols, emblems, authorized marks, and the like. Although the information indicated by the marks 4 are not particularly restricted, for instance, the information can be determined depending on the purpose of the composite card 1. Also, the material, the grade or quality, the weight and the like of the metal plate 2 may be indicated by the marks 4. The above mentioned information concerning the metal plates 2 can be indicated on every metal plate 2 while the information according to the purpose of the composite card 1 may be indicated on the card. The marks 4 may be formed by a tool such as punch. Therefore, the marks 4 can be formed simply and easily according to the options. Because the marks 4 are formed by stamping or punching, a predetermined thickness is required for the metal plate 2 so chat the metal plate 2 shall not be perforated by said punching.

Further, the marks 4 can be simply and speedily formed by another method. An example is a method using LASER (Light Amplification by Stimulated Emission of Radiation) beam radiated on the metal plate 2 so as to form grooves having predetermined configuration. The LASER beam includes YAG or Yttrium-Alminum-Garnet and the like. When forming the marks 4 by this method, the depth of the marks 4 or the grooves are adjusted depending on the thickness etc. of the metal plate 2 by controlling an output power of LASER beam. The depth of the grooves is preferably about one-tenth of the thickness of the metal plate 2 in order to prevent the metal plate 2 from being perforated.

The reinforcement plate 3 is a sheet-like member for protecting the metal plate 2 in order to retain the beauty or the decorative worth thereof. The thickness of the reinforcement plate 3 is between 50 and 2500 microns, depending upon the nature of the material from which it is made. Also, the reinforcement plate 3 has mirror-image marks 5 formed on a face thereof which is in contact with the metal plate 2 as shown in Figs. 1 and 3. Therefore, with a view to protecting the metal plate 2 and keeping the marks 5 visible through the reinforcement plate 3, the reinforcement plate 3 may be made of transparent and hard materials having a mechanical strength sufficient to protect the metal plate 2. Such materials include resins such as modified acrylic resin, and glass such as quartz glass, preferably. The reinforcement plate 3 is not necessarily made of the abovementioned hard materials, soft and resilient materials may be also used. When the reinforcement plate 3 is made of such materials said materials are so chosen that the metal plate 2 is protected by the reinforcement plate 3, and further, the marks 5 are visible through the reinforcement plate 3.

In addition, the mirror-image marks 5 may be formed on the reinforcement plate 3 by a method comprising steps of; etching the face of the reinforcement plate 3 so as to form grooves designating characters, numerals, alphabets, figures, graphs, symbols, emblems, authorized marks, and the like, and filling the grooves with paints. The surface of the paint lies in the plane defined by the reinforcement plate 3. The information given by the marks 5 is not restricted. It may indicate the nature and quality of the metal plate 2. Also, the marks 5 may be formed by braille types or symbols which are distinguishable in the dark. Further, the marks 5 may be formed by one or more methods as follows; engraving in relief, etching, printing, painting or the like.

With the view of obtaining a composite card 1 that has a considerable decorative worth, the reinforcement plate 3 may have a devitrified portion formed on a background of the marks 5 when the marks 5 is transparent. Further, when the marks 5 are formed by grooves, the grooves may be perforated so as to expose one face of the metal plate 2 through the reinforcement plate 3.

The thus obtained composite card 1 can be used as a present on various occasions such as a wedding for example. In this case, the marks 4 of the metal plate 2 or the marks 5 of the reinforcement plate 3 can indicate words for congratulations, the name of the presenters or the presentees, and the like. Since the nature and quality of the metal plate need not be formed on the metal plate 2 but on the reinforcement plate 3, and therefore the composite card 1 can be simply and easily manufactured.

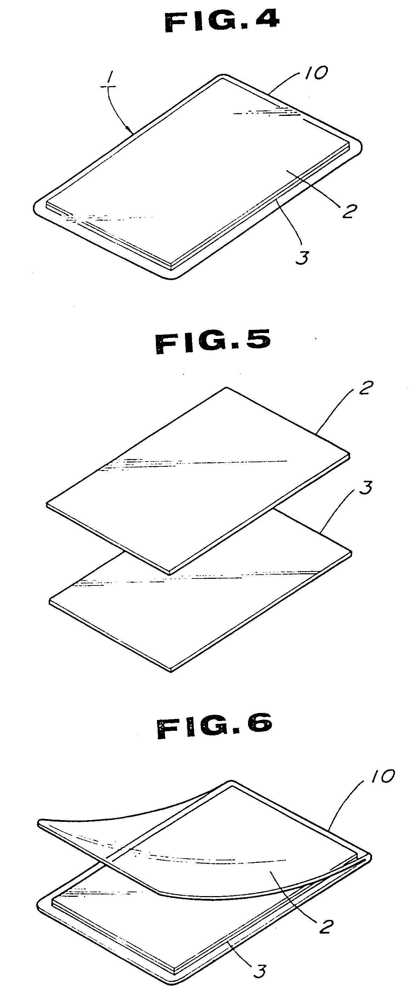

A second embodiment of this invention is illustrated in Figs. 4 to 6. Fundamentally, the composite card 1 is not substantially different from the first embodiment described in connection with Figs. 1 to 3 except that the composite card 1 of Figs. 4 to 6 further includes a protective film 10. The protective film 10 having a rectangular shape covers two plates 2 and 3 superposed on each other. The protective film 10 has a thickness of about 100 microns, and is preferably made of soft, resilient and transparent materials. When the film 10 is made of such materials, the metal plate 2 looks presentably through the film 10. As dimensions of the film 10, width thereof is preferably longer than that of the abovementioned plates 2 or 3, length thereof is greater more than about 102 or 103 % of that of the plates 2 or 3 when the film 10 is folded in halves, and thickness thereof is between 50 and 2500 microns. Thus film 10 may have the abovementioned marks 4 and marks 5.

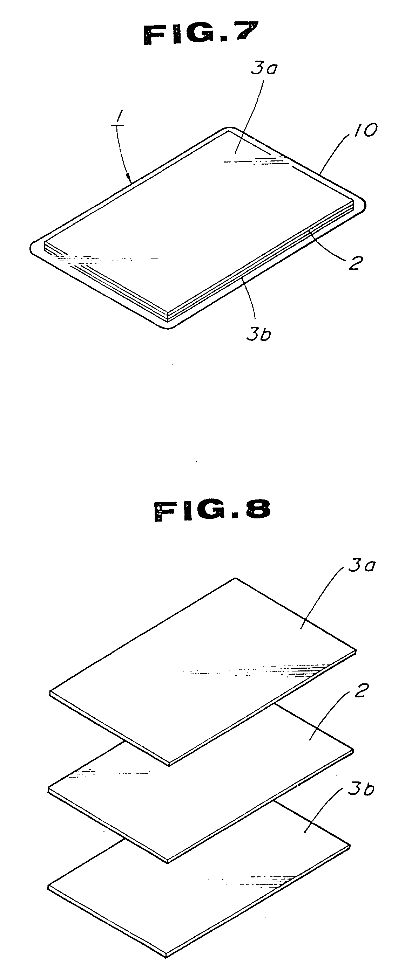

The composite card 1 of Fig. 4 can be manufactured by a method comprising steps of; superposing the metal plate 2 on the reinforcement plate 3 as shown in Fig. 5, folding the long film 10 in halves so as to make two leaves, first and second portions, having the identical form to each other, interposing the plates 2 and 3 between two leaves or between the first and second portions of the film 10 as shown in Fig. 6, and bonding the marginal portions along three edges of the leaves of the film 10 each other.

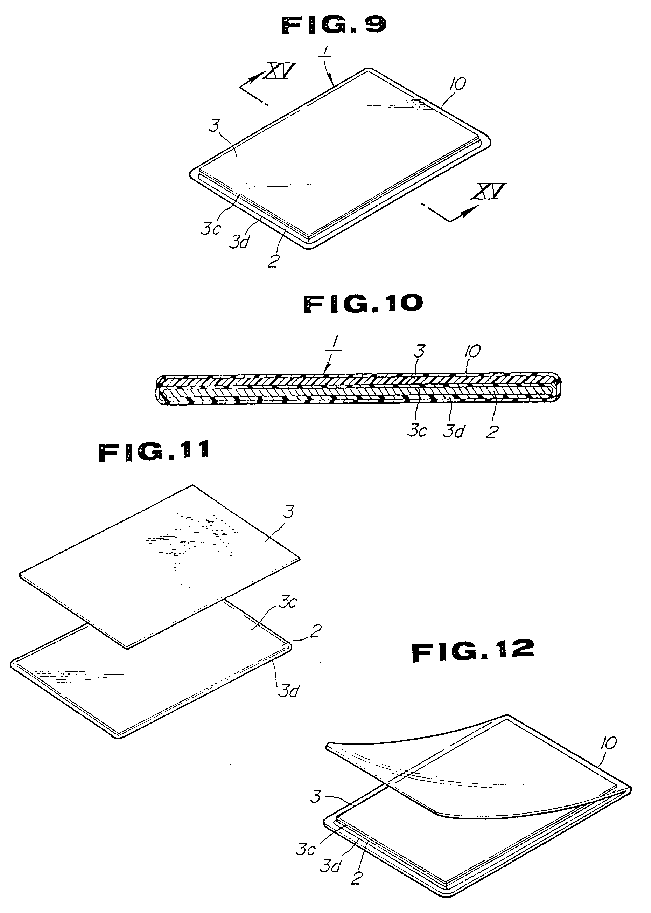

Figs. 7 and 8 show a third embodiment of this invention which has one significant difference from the second embodiment as abovementioned.

The difference is that there is a pair of reinforcement plates 3a and 3b which are superposed on each face of the metal plate 2 instead of one reinforcement plate 3 which is superposed on one face thereof. The reinforcement plates 3a and 3b each have the identical plan-view geometries as the metal plate 2, and are made of the abovementioned transparent materials. In this embodiment, the composite card 1 can be manufactured by a method comprising steps of; interposing the metal plate 2 between the reinforcement plates 3a and 3b as shown in Fig. 8, and covering or laminating entirely three plates 2, 3a and 3b with the protective film 10 to provide the composite card 1 as shown in Fig. 7.

A fourth embodiment of this invention is illustrated in Figs. 9 to 12. Fundamentally, the composite card 1 is not substantially different from the second embodiment described in connection with Figs. 4 to 6 except for one difference. The difference is that a metal plate 2 shown in Figs. 9 to 12 is laminated by reinforcement films 3c and 3d, a reinforcement plate 3 and an overall protective film 10.

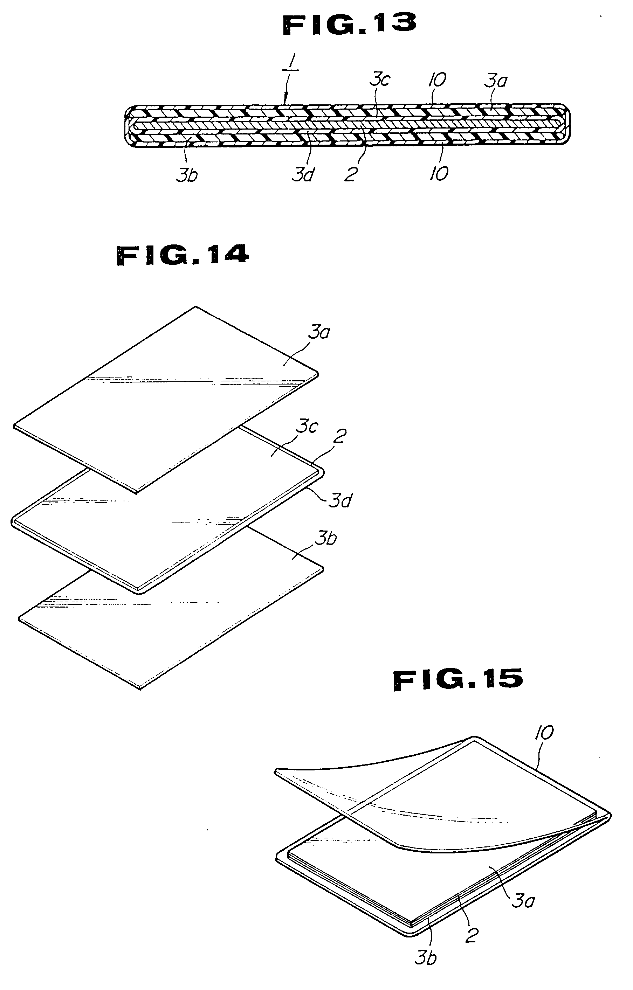

Figs. 13 to 15 show a fifth embodiment of the invention which has one significant difference from the third embodiment described in connection with Figs. 7 and 8.

The difference is that a metal plate 2 of Figs. 13 to 15 is laminated with reinforcement films 3c and 3d, reinforcement plate 3a and 3b, and an overall enveloping protective film 10.

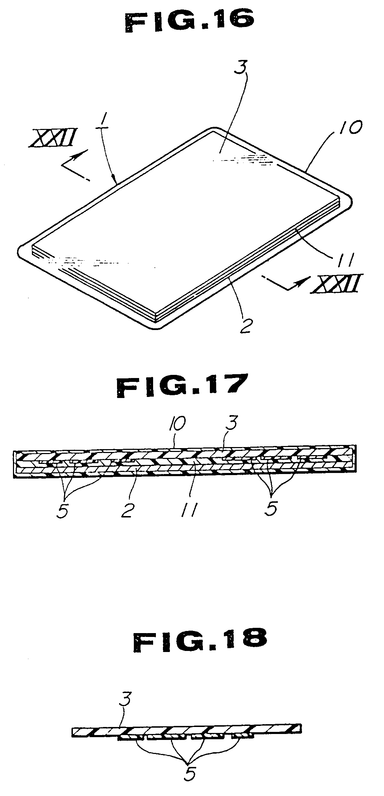

Figs. 16 to 21 show further modified preferred embodiments (sixth, seventh, eighth and ninth) of this invention which have a cushion sheet as a shock-absorber.

The sixth embodiment of the invention is illustrated in Figs. 16 and 17. Fundamentally, the composite card 1 is not substantially different from the second embodiment described in connection with Figs. 4 to 6 except that the composite card 1 further includes a cushion sheet 11 which is interposed between the metal plate 2 and the reinforcement plate 3. The cushion sheet 11 is a member for absorbing shocks or impacts which may be exerted on the composite card 1 and for preventing the metal plate 2 from being damaged. The cushion sheet 11 has the same identical plan-view geometries as the plates 2 or 3, and the thickness of the cushion sheet 11 is between 50 and 2500 microns.

In this embodiment of the present invention, the marks 5 are formed by small plates 5a laid on a face of the reinforcement plate 3 which is in contact with the cushion sheet 11, and the surface of the small plates 5a do not come in the plain face of the reinforcement plate 3. Namely, the plain face has an uneven portion defined by the small plates 5a as shown in Fig. 18. In this case, the cushion sheet 11 can also absorb the unevenness of the marks 5 so as to prevent each face of the metal plate 2 from becoming uneven. Therefore, the cushion sheet 11 is preferably made of soft or resilient materials.

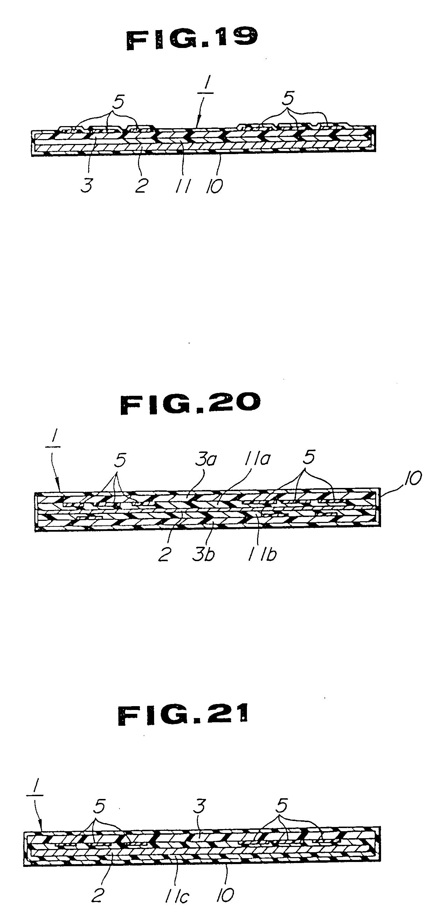

The seventh embodiment of this invention is shown in Fig. 19 Fundamentally, the composite card 1 has one significant different from the sixth embodiment described in connection with Figs. 16 and 17. The difference is that there is are marks 5 formed on one face of the reinforcement plate 3 which are in contact with the protective film 10 instead of the marks 5 which are formed on the face of the plate 3 being in contact with the cushion sheet 11. In this case, the face of the marks 5 do not come in the plain face of the reinforcement plate 3. Namely, the face of the protective film 10 facing outwards becomes uneven because of the marks 5. In this embodiment, the marks 5 may be formed so as to form braille types on the protective film 10.

The eighth embodiment of the invention is shown in Fig. 20. Fundamentally, the composite card 1 is not substantially different from the sixth embodiment described in connection with Figs. 16 and 17 except for one difference. The difference is that there is a pair of cushion sheets 11a and 11b which are superposed on each face of the metal plate 2 instead of the cushion sheet 11 which is superposed on one face of the metal plate 2. Namely, the composite card 1 of Fig. 20 comprises a metal plate 2, a pair of cushion sheets 11a and 11b superposed on the both faces of the metal plate 2, a pair of reinforcement plates 3a and 3b superposed respectively on the faces of the cushion sheets 11a and 11b directed away from the metal plate 2, and a protective film 10 for covering the metal plate 2, the cushion sheets 11a and 11b, and the reinforcement plates 3a and 3b. All of the members are made of the abovementioned transparent materials except the metal plate 2, and the metal plate 2 can be presentably seen through the above members. Also, marks 5 are formed to be partially cloudy or opaque on the faces of the reinforcement plate 3a and 3b being respectively in contact with the cushion sheets 11a and 11b, and the marks 5 look as if they are lifted out of a background of the metal plate 2.

The ninth embodiment of this invention is illustrated in Fig. 21. Fundamentally, the composite card 1 is not substantially different from the sixth embodiment described in connection with Figs. 16 and 17 except for one difference. The difference is that there is a metal plate 2 which is laminated entirely with a cushion film 11c instead of the metal plate 2 which is superposed the cushion sheet 11 on one face thereof. In this case, the whole metal plate 2 can be certainly protected by the cushion film 11c to prevent it from be damaged.

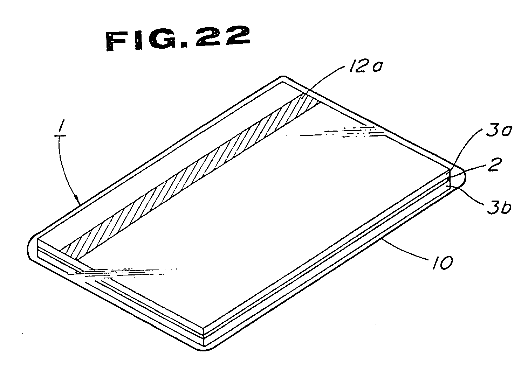

A tenth embodiment of the invention is illustrated in Fig. 22. In Fig. 22 there is a tape-like magnetic recording layer 12a formed on a marginal portion along longitudinal edge of the reinforcement plate 3a. There is a protective film 10 which covers entirely the plates 2, 3a and 3b therewith.

The tape-like layer 12a has all information relating to a cash and the like, and therefore the composite card 1 can used as a cash dispenser card.

Although each configuration of the composite card 1 shown in Figs. 1 to 22 is a rectangular shape, the configuration is not necessarily restricted to the rectangular shape. The composite card having any configuration may be formed depending on the usage thereof.

## Claims

1. A composite card comprising a thin metal plate (2) of at least one of precious metals or alloys thereof defining a substantially planar element having first and second planar surfaces, said thin metal plate (2) being encapsulated in a transparent polymeric cover material (3c, 3d, 10);
**characterized in that**
a first decorative reinforcement plate (3, 3a) of a transparent polymeric material capable of protecting said thin metal plate (2) is disposed in facing relation to said first planar surface of said thin metal plate (2), and that the combination of said first decorative reinforcement plate (3, 3a) and said thin metal plate (2) is encapsulated in said transparent cover material (3c, 3d, 10).

2. A composite card as recited in Claim 1, wherein said transparent cover material includes first and second polymeric cover members (3c and 3d), having a size slightly larger than the combination so as to entirely cover the combination with peripheral portions of the cover members being bonded to each other.

3. A composite card as recited in any one of the preceding claims, wherein said first decorative reinforcement plate (3, 3a) of a transparent material includes a decorative pattern (5), provided on a surface thereof.

4. A composite card as recited in any one of the preceding claims, wherein said thin metal plate has a thickness of 0.005 to 0.3 millimeters.

5. A composite card as recited in any one of the preceding claims, wherein said substantially planar element further includes first and second polymeric protective members (3c, 3d) covering said thin metal plate (2) so that said thin metal plate is laminated between said first and second protective members.

6. A composite card as recited in any one of the preceding claims, wherein a second decorative reinforcement plate of a transparent polymeric material (3b) is disposed in facing relation to said second planar surface of said substantially planar element, the combination of said first and second decorative reinforcement plates of a transparent polymeric material and said substantially planar element being encapsulated in said transparent cover material.

7. A composite card as recited in any one of the preceding claims, further comprising a third layer of a transparent polymeric material (11) interposed between said first decorative reinforcement plate (3) and said transparent cover material (10).

8. A composite card as recited in any one of the preceding claims, wherein a magnetic material (12a) is formed on said first decorative reinforcement plate (3, 3a).

9. A process of manufacturing a composite card, comprising the steps of providing a thin metal plate of at least one of precious metals or alloys thereof to define a substantially planar element having first and second planar surfaces, and encapsulating said substantially planar element in a transparent polymeric cover material,
characterized in that a first decorative reinforcement plate of a transparent polymeric material capable of protecting the thin metal plate is disposed in facing relation to said first planar surface of said thin metal plate, and that said encapsulating step comprises encapsulating the combination of said first decorative reinforcement plate and said thin metal plate in said transparent cover material.

10. A process as recited in claim 9, wherein said step of encapsulating comprises providing first and second polymeric cover members each having a size slightly larger than the combination, laminating the combination between said first and second polymeric cover members and thermal bonding the same.

11. A process as recited in any one of claims 9 and 10, wherein said step of providing a first decorative reinforcement plate (3, 3a) of transparent material comprises the steps of providing a transparent material and providing a decorative pattern on a surface thereof.

12. A process as recited in claim 11, wherein said step of providing a decorative pattern comprises at least one of printing, painting, engraving and etching at least one of decorative and informational material on the transparent material.

13. A process as recited in any one of the preceding claims, wherein said thin metal plate has a thickness of 0.005 to 0.3 millimeters.

14. A process as recited in any one of claims 9 to 13, wherein said step of providing a thin metal plate to define a substantially planer element further comprises providing first and second polymeric protective members and laminating the thin metal plate with said first and second polymeric protective members.

15. A process as recited in any one of claims 9 to 14, further comprising the step of providing a second decorative reinforcement plate of a transparent material in facing relation to said second planar surface of said substantially planar element, and wherein said step of encapsulating comprises laminating the combination of said first and second decorative reinforcement plates of a transparent polymeric material and said substantially planer element between two sheets of said transparent cover material.

16. A process as recited in any one of claims 9 to 15, further comprising interposing a third layer of a transparent polymeric material between said first decorative reinforcement plate and said transparent cover material.

17. A process as recited in any one of claims 9 to 16, further comprising providing a magnetic material on said first decorative reinforcement plate.

## Patentansprüche

1. Verbundkarte mit einer dünnen Metallplatte (2) aus zumindest einem von Edelmetallen oder Legierungen daraus, die ein im wesentlichen ebenes Element bestimmt, welches erste und zweite ebene Flächen besitzt, wobei die dünne Metallplatte (2) in einem transparenten polymeren Abdeckungsmaterial (3c, 3d, 10) eingekapselt ist;
dadurch **gekennzeichnet,**
daß eine erste dekorative Verstärkungsplatte (3, 3a) aus einem transparenten polymeren Material, die geeignet ist, die dünne Metallplatte (2) zu schützen, in gegenübergelegener Beziehung zur ersten ebenen Oberfläche der dünnen Metallplatte (2) angeordnet ist, und
daß die Kombination der ersten dekorativen Verstärkungsplatte (3, 3a) und der dünnen Metallplatte (2) in das transparente Abdeckungsmaterial (3c, 3d, 10) eingekapselt ist.

2. Verbundkarte nach Anspruch 1, wobei das transparente Abdeckungsmaterial erste und zweite polymere Abdeckungsglieder (3c und 3d) aufweist, die eine Abmessung besitzen, die geringfügig größer ist als die Kombination, um so die Kombination gänzlich abzudecken, wobei Randabschnitte der Abdeckungsglieder miteinander verschweißt werden.

3. Verbundkarte nach einem der vorhergehenden Ansprüche, wobei die erste dekorative Verstärkungsplatte (3, 3a) aus einem transparenten Material ein dekoratives Muster (5) aufweist, das auf einer ihrer Flächen vorgesehen ist.

4. Verbundkarte nach einem der vorhergehenden Ansprüche, wobei die dünne Metallplatte eine Dicke von 0,005 bis 0,3 mm aufweist.

5. Verbundkarte nach einem der vorhergehenden Ansprüche, wobei das im wesentlichen ebene Element weiterhin erste und zweite polymere Schutzglieder (3c, 3d) aufweist, welche die dünne Metallplatte (2) bedecken, so daß die dünne Metallplatte zwischen dem ersten und zweiten Schutzglied einlaminiert ist.

6. Verbundkarte nach einem der vorhergehenden Ansprüche, wobei eine zweite dekorative Verstärkungsplatte aus einem transparenten polymeren Material (3b) in gegenübergelegener Beziehung zur zweiten ebenen Fläche des im wesentlichen ebenen Elements angeordnet ist, wobei die Kombination der ersten und zweiten dekorativen Verstärkungsplatten aus einem transparenten polymeren Material und dem im wesentlichen ebenen Element in dem transparenten Abdeckungsmaterial eingekapselt ist.

7. Verbundkarte nach einem der vorhergehenden Ansprüche, die weiterhin eine dritte Lage aus einem transparenten polymeren Material (11) aufweist, die zwischen die erste dekorative Verstärkungsplatte (3) und das transparente Abdeckungsmaterial (10) eingelegt ist.

8. Verbundkarte nach einem der vorhergehenden Ansprüche, wobei ein magnetisches Material (12a) auf der ersten dekorativen verstärkungsplatte (3, 3a) ausgebildet ist.

9. Verfahren zur Herstellung einer Verbundkarte mit den Schritten: Schaffen einer dünnen Metallplatte von zumindest einem von Edelmetallen oder Legierungen davon, um ein im wesentlichen ebenes Element zu bestimmen, welches erste und zweite ebene Flächen besitzt, und Einkapseln des im wesentlichen ebenen Elements in ein transparentes polymeres Abdeckungsmaterial,
dadurch **gekennzeichnet,**
daß eine erste dekorative Verstärkungsplatte aus einem transparenten polymeren Material, die geeignet ist, die dünne Metallplatte zu schützen, in gegenübergelegener Beziehung zu der ersten ebenen Fläche der dünnen Metallplatte angeordnet wird und daß der Einkapselungsschritt das Einkapseln der Kombination der ersten dekorativen Verstärkungsplatte und der dünnen Metallplatte in dem transparenten Abdeckungsmaterial aufweist.

10. Verfahren nach Anspruch 9, wobei der Einkapselungsschritt die Schaffung erster und zweiter polymerer Abdeckungsglieder, von denen jedes eine Abmessung besitzt, die geringfügig größer ist als die Kombination, das Laminieren der Kombination zwischen den ersten und zweiten polymeren Abdeckungsgliedern und das thermische Verschweißen derselben aufweist.

11. Verfahren nach einem der Ansprüche 9 und 10, wobei der Schritt des Schaffens einer ersten dekorativen Verstärkungsplatte (3, 3a) aus transparentem Material die Schritte aufweist: Schaffen eines transparenten Materials und Schaffen eines dekorativen Musters auf einer Oberfläche davon.

12. Verfahren nach Anspruch 11, wobei der Schritt des Schaffens eines dekorativen Musters zumindest einen der Schritte Drucken, Malen, Eingravieren und Ätzen von zumindest einem von dekorativem und informierendem Material auf dem transparenten Material aufweist.

13. Verfahren nach einem der vorhergehenden Ansprüche, wobei die dünne Metallplatte eine Dicke von 0,005 bis 0,3 mm besitzt.

14. Verfahren nach einem der Ansprüche 9 bis 13, wobei der Schritt des Schaffens einer dünnen Metallplatte zum Bestimmen eines im wesentlichen ebenen Elementes weiterhin die Schritte aufweist: Schaffen erster und zweiter polymerer Schutzglieder und Laminieren der dünnen Metallplatte mit den ersten und zweiten polymeren Schutzgliedern.

15. Verfahren nach einem der Ansprüche 9 bis 14, welches weiterhin den Schritt aufweist, eine zweite dekorative Verstärkungsplatte aus einem transparenten Material in gegenübergelegener Beziehung zur zweiten ebenen Fläche des im wesentlichen ebenen Elements zu schaffen, und wobei der Schritt des Einkapselns das Laminieren der Kombination der ersten und zweiten dekorativen Verstärkungsplatten aus einem transparenten polymeren Material und dem im wesentlichen ebenen Element zwischen zwei Blättern des transparenten Abdeckungsmaterials aufweist.

16. Verfahren nach einem der Ansprüche 9 bis 15, welches weiterhin das Zwischenlegen einer dritten Lage eines transparenten polymeren Materials zwischen die erste dekorative Verstärkungsplatte und das transparente Abdeckungsmaterial aufweist.

17. Verfahren nach einem der Ansprüche 9 bis 16, welches weiterhin die Schaffung eines magnetischen Materials auf der ersten dekorativen Verstärkungsplatte aufweist.

## Revendications

1. Carte composite comprenant une fine plaque métallique (2) d'au moins un des métaux précieux ou de leurs alliages définissant un élément sensiblement plan ayant des première et seconde surfaces planes, ladite fine plaque métallique (2) étant enrobée dans un matériau polymère transparent de couverture (3c, 3d, 10);
caractérisée en ce que :
- une première plaque décorative de renforcement (3, 3a) en matériau polymère transparent capable de protéger ladite fine plaque métallique (2) est disposée en relation de face à face avec ladite première surface plane de ladite fine plaque métallique (2), et en ce que la combinaison de ladite première plaque décorative de renforcement (3, 3a) et de ladite fine plaque métallique (2) est enrobée dans ledit matériau transparent de couverture (3c, 3d, 10).

2. Carte composite selon la revendication 1, dans laquelle ledit matériau transparent de couverture comporte des premier et second éléments de couverture en polymère (3c et 3d), ayant des dimensions légèrement supérieures à la combinaison de manière à recouvrir entièrement la combinaison avec des parties périphériques des éléments de couverture liées l'une à l'autre.

3. Carte composite selon l'une quelconque des revendications précédentes, dans laquelle ladite première plaque décorative de renforcement (3 , 3a) en matériau transparent comporte un motif de décoration (5) prévu sur sa surface.

4. Carte composite selon l'une quelconque des revendications précédentes, dans laquelle ladite fine plaque métallique a une épaisseur comprise entre 0,005 et 0,3 millimètre.

5. Carte composite selon l'une quelconque des revendications précédentes, dans laquelle ledit élément sensiblement plan comporte en outre des premier et second éléments de protection en polymère (3c, 3d) qui recouvrent ladite fine plaque métallique (2) de sorte que ladite fine plaque métallique est laminée entre lesdits premier et second éléments de protection.

6. Carte composite selon l'une quelconque des revendications précédentes, dans laquelle une seconde plaque décorative de renforcement en matériau polymère transparent (3b) est disposée en relation de face à face avec ladite seconde surface plane dudit élément sensiblement plan, la combinaison desdites première et seconde plaques décoratives de renforcement en matériau polymère transparent et dudit élément sensiblement plan étant enrobée dans ledit matériau transparent de couverture.

7. Carte composite selon l'une quelconque des revendications précédentes, comprenant en outre une troisième couche d'un matériau polymère transparent (11) interposée entre ladite première plaque décorative de renforcement (3) et ledit matériau transparent de couverture (10).

8. Carte composite selon l'une quelconque des revendications précédentes, dans laquelle un matériau magnétique (12a) est formé sur ladite première plaque décorative de renforcement (3, 3a).

9. Procédé de fabrication d'une carte composite, comprenant les étapes consistant à fournir une fine plaque métallique d'au moins l'un des métaux précieux ou de leurs alliages pour définir un élément sensiblement plan ayant des première et seconde surfaces planes, et à enrober ledit élément sensiblement plan dans un matériau polymère transparent de couverture, caractérisé en ce qu'une première plaque décorative de renforcement en matériau polymère transparent capable de protéger la fine plaque métallique est disposée en relation de face à face avec ladite première surface plane de ladite fine plaque métallique, et en ce que ladite étape d'enrobage comprend l'enrobage de la combinaison de ladite première plaque décorative de renforcement et de ladite fine plaque métallique dans ledit matériau transparent de couverture.

10. Procédé selon la revendication 9, dans lequel ladite étape d'enrobage comprend la fourniture de premier et second éléments polymères de couverture, chacun ayant des dimensions légèrement supérieures à celles de la combinaison, le laminage de la combinaison entre lesdits premier et second éléments polymères de couverture et la liaison thermique de celle-ci.

11. Procédé selon l'une quelconque des revendications 9 et 10, dans lequel ladite étape consistant à fournir une première plaque décorative de renforcement (3, 3a) en matériau transpartent comprend les étapes consistant à fournir un matériau transparent et à fournir un motif décoratif sur l'une de ses surfaces.

12. Procédé selon la revendication 11, dans lequel ladite étape consistant à fournir un motif décoratif comprend au moins l'impression, la peinture, la gravure et l'attaque d'au moins l'un des matériaux de décoration et d'information sur le matériau transparent.

13. Procédé selon l'une quelconque des revendications précédentes, dans lequel ladite fine plaque métallique a une épaisseur comprise entre 0,005 et 0,3 millimètre.

14. Procédé selon l'une quelconque des revendications 9 à 13, dans lequel ladite étape consistant à fournir une fine plaque métallique pour définir un élément sensiblement plan comprend en outre la fourniture de premier et second éléments polymères de protection et à laminer la fine plaque métallique avec lesdits premier et second éléments polymères de protection.

15. Procédé selon l'une quelconque des revendications 9 à 14, comprenant en outre l'étape consistant à fournir une seconde plaque décorative de renforcement en matériau transparent, en relation de face à face avec ladite seconde surface plane dudit élément sensiblement plan, et dans lequel ladite étape d'enrobage comprend le laminage de la combinaison des première et seconde plaques décoratives de renforcement en matériau polymère transparent et dudit élément sensiblement plan entre deux feuilles dudit matériau transparent de couverture.

16. Procédé selon l'une quelconque des revendications 9 à 15, comprenant en outre l'étape d'interposition d'une troisième couche d'un matériau polymère transparent entre ladite première plaque décorative de renforcement et ledit matériau transparent de couverture.

17. Procédé selon l'une quelconque des revendications 9 à 16, comportant en outre l'étape de fourniture d'un matériau magnétique sur ladite première plaque décorative de renforcement.
